# EUROPEAN PATENT SPECIFICATION

(11) **EP 1 862 648 B1**
(45) Date of publication and mention of the grant of the patent: **14.10.2009**
(21) Application number: 07106341.6
(22) Date of filing: 17.04.2007
(51) Int. Cl.: F01L 1/344

(54) **Hydraulic camshaft phaser with mechanical lock**
Hydraulischer Nockenwellenversteller mit mechanischer Sperre
Appareil de mise en phase d'arbre à cames hydraulique

(30) Priority: 19.04.2006 GB 0607642
(43) Date of publication of application: 05.12.2007
(73) Proprietor: Mechadyne PLC, Kirtlington, Oxfordshire OX5 3JQ (GB)
(72) Inventor: Methley, Ian, Witney, OX OX29 8JL (GB)
(74) Representative: Messulam, Alec Moses

(56) References cited:
- EP-A- 1 365 112
- WO-A-01/61154
- DE-A1- 10 339 669
- DE-A1- 19 849 959
- GB-A- 2 372 797
- US-A1- 2001 003 974

## Description

### Field of the invention

The present invention relates to a hydraulically operated camshaft phaser and is particularly concerned with locking the phaser in a preset position.

### Background of the invention

It is known for hydraulically operated camshaft phasers to be fitted with a locking system to control the position of the phaser when there is insufficient oil supply pressure to do so. An example of such a system is disclosed in GB 0428063.2. Conventionally, the locking system holds the phaser at one extreme of its operating range such that it will be returned to the locking position either by the camshaft drive torque, or by a simple return spring arrangement.

GB 2,372,797 describes a phaser in which the locking system holds the phaser in an intermediate position. A spring acts to urge the phaser into a position beyond the intermediate locking position and the reaction forces acting on the camshaft are relied upon to move the phaser against the action of the spring while the engine is being restarted.

A disadvantage of such a system is that it cannot be used in a valve train where the phaser is not subjected to strong torque reaction forces. This may be the case for example where the phaser is used to alter the phase between two cams which act by way of a summation lever on the same valve to effect variable lift and/or event duration.

### Summary of the invention

According to the present invention, there is provided a camshaft phaser comprising a drive member and a driven member having a fixed range of angular adjustment, a means for locking the position of the driven member relative to the drive member at an intermediate position within the range of adjustment, and a means for biasing the phaser towards the intermediate position where the locking means will engage, characterised in that the means for biasing the phaser towards the lock position is a torque spring configured to act in both directions.

### Brief description of the drawings

The invention will now be described further, by way of example, with reference to the accompanying drawings, in which:
Figs. 1 and 2 are graphs showing the range of adjustment of different camshaft phasers,
Fig. 3 is a perspective view of a first camshaft phaser embodying the invention,
Fig. 4 is a view from above of the camshaft phaser of Fig. 3,
Figs. 5 and 6 are sections taken along the lines V-V and VI-VI in Fig. 4, respectively,
Figs. 7 and 8 are views similar to the views of Figs. 3 and 4, showing a second embodiment of the invention,
Figs. 9 and 10 are views similar to the views of Figs. 3 and 4, showing a third embodiment of the invention, and
Figs. 11 to 16 show a fourth embodiment of invention, Fig. 11 being an exploded view, Fig. 12 a perspective view, Fig. 13 a view from above, Fig. 14 a front view, Fig. 15 a section along the line XV-XV in Fig. 14 and Fig. 16 a section along the line XVI-XVI in Fig. 15.

### Detailed description of the preferred embodiments

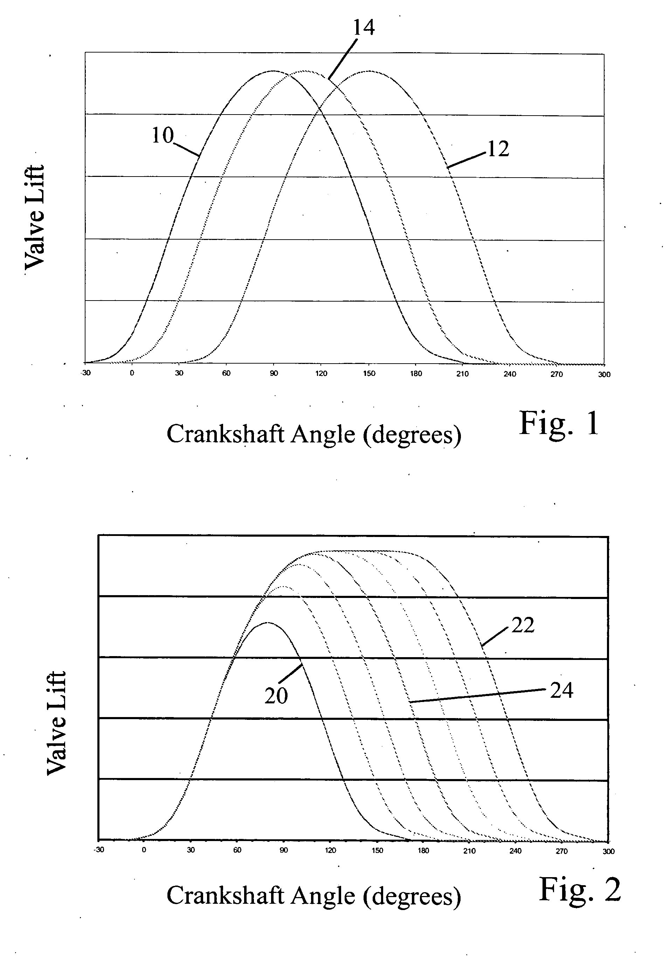

The invention may be used in a phaser for controlling the timing of intake/exhaust valve opening relative to the crankshaft, as shown in Fig. 1. Here the graph 10 shows a valve event when the phaser is at one end of its range and graph 12 the event of the same valve when the phaser is at the opposite end of its range. Normally, the locked position when the oil pressure is too low to operate the phaser is selected to be one or other of these two end positions but in the present invention, the phaser is designed to lock in a central position, such as the position represented by the graph 14.

The invention can also be used in a phaser which controls the valve lift using a cam-summation system as shown in Fig. 2. Here valve events in the end positions of the phaser are represented by the graphs 20 and 22 and the valve event in the locked position by an intermediate graph 24.

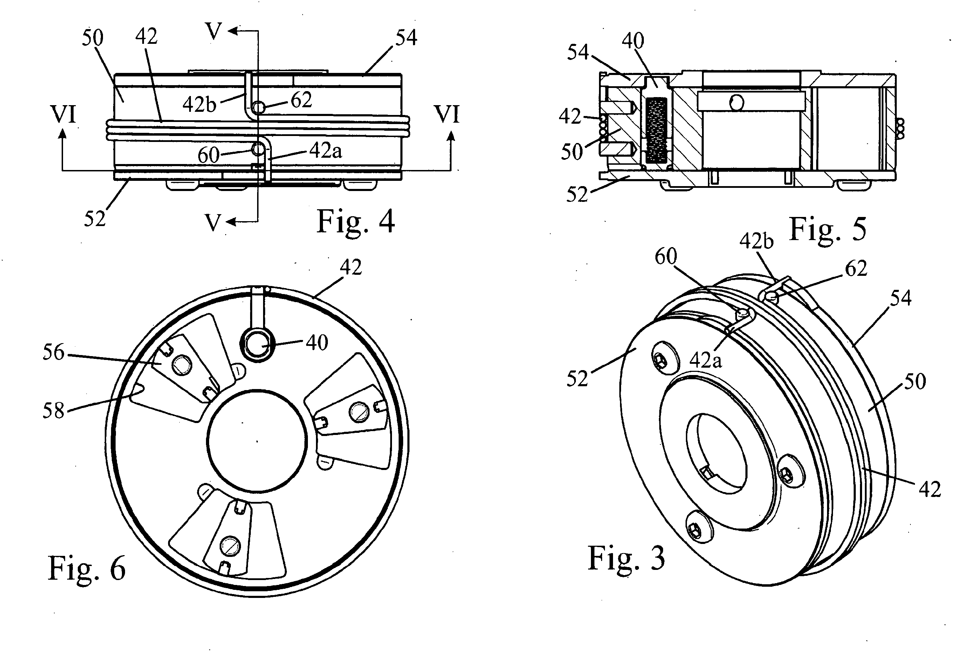

The embodiment of Figs. 3 to 5 uses a single locking pin 40 and an external double acting spring 42. As in all the embodiments to be described, the illustrated phaser is a vane-type phaser which is well known in the art. A full description of a similar phaser and locking pin are to be found in GB 2413168 and need not be repeated in the present context. Essentially, the phaser comprises a drive member or stator 50 which is connected for rotation with the engine crankshaft and a driven member or rotor which comprises two end plates 52 and 54 connected to vanes 56 which move in and, are sealed relative to, arcuate recesses 58 in the stator 50, each vane 56 dividing its recess into two opposed working chambers. As oil is pumped into one working chamber and allowed to escape from the other, the rotor is rotated relative to the stator to vary the phase of the camshaft relative to the crankshaft. The locking pin 40, which is mounted in a bore in the stator, is hydraulically retracted when there is sufficient oil pressure to rotate the rotor relative to the stator. In the absence of sufficient oil pressure, an internal spring expands the locking pin 40 and its end engages in the hole in the end plate 54 to lock the rotor and stator relative to one another.

The locking pin 40 is positioned to engage in the end plate 54 when the vanes 56 are in a central position in the recesses 58. The rotor is biased towards that position by the double acting torque spring 42 which surrounds the stator 50.

In order to achieve this, each end of the torque spring 42 is able to act on both the rotor 50 and one of the end plates 52, 54. When the phaser is in the locked position, the torque spring is held in a pre-loaded position by two pins 60, 62 protruding from the outside of the rotor 50. If the phaser is rotated in either direction, one end 42a, 42b of the spring 42 will be moved away from its pin 60, 62 in the rotor 50 by the end plate 52, 54 of the phaser, and so the torque of the spring will act on the end plate to return the phaser to its locked position.

Moving the phaser in the opposite direction will cause the opposite end plate of the phaser to engage the spring and hence the spring torque will act in the opposite direction.

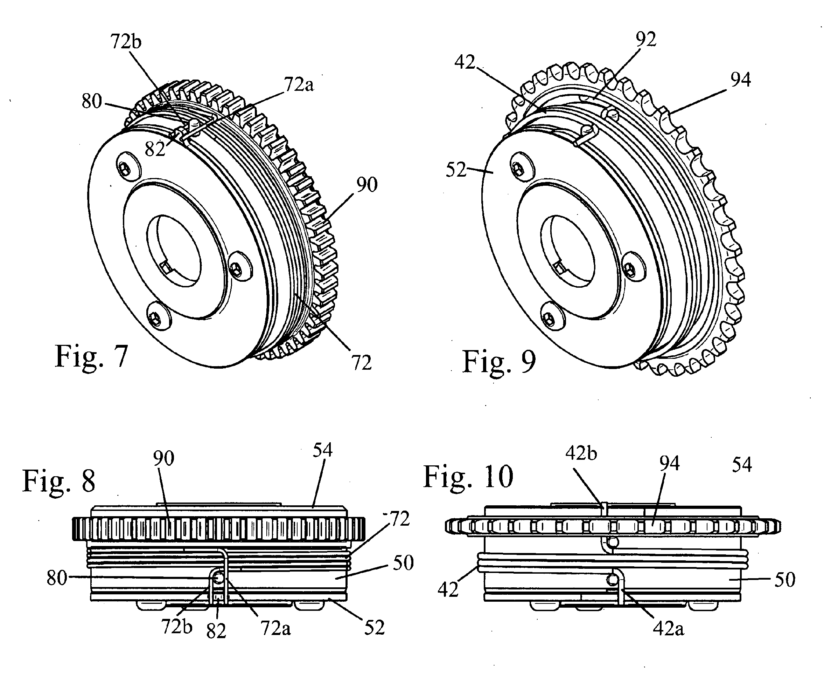

A number of different spring arrangements are possible, depending on the design of the phasing system. Many phasers have drive sprockets or gears mounted on their outer diameters integrally with the stator. The embodiments of Figures 7 to 10 show the invention may be implemented in such phasers.

The phaser in Figs. 7 and 8 uses a different spring 72 that has a leg 72a which passes over the spring coils such that both ends 72a and 72b of the spring are adjacent to each other. This allows the spring 72 to act on both sides of a single pin 80 in the rotor 50, and on both sides of a lug 82 on only one of the two ends plates 52. This design avoids the need for the spring to engage with the opposite end plate 54, and hence the need for it to pass through the drive gear 90.

The phaser of Figs. 9 and 10 is similar to that of Figs. 3 to 6, except that there is a slot 92 to allow one end 42b of the spring 42 to pass through the drive sprocket 94 and engage with the rear end plate 54.

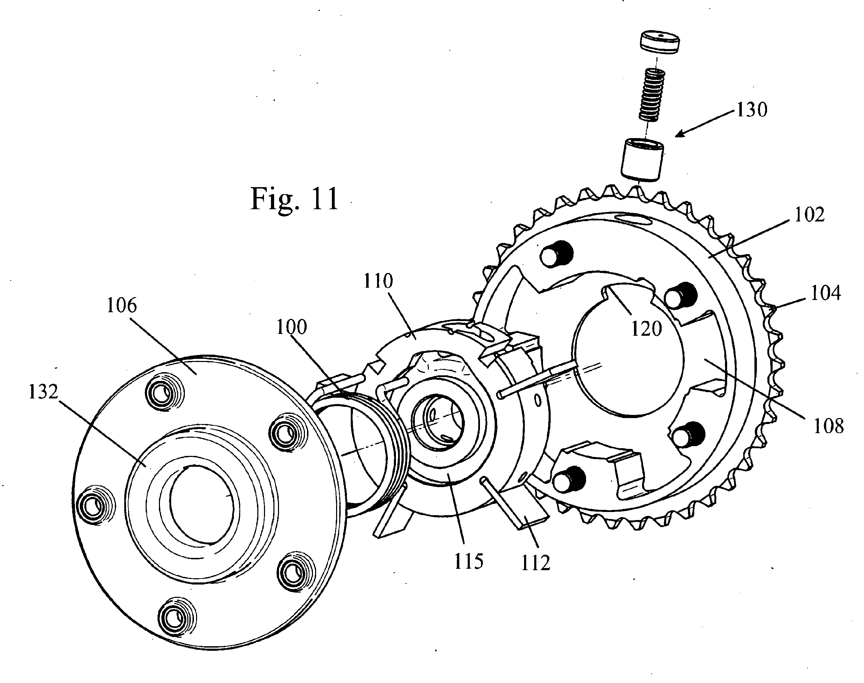

The embodiment of Figs. 11 to 16, uses a spring mounted within rather than outside the phaser and the phaser has a locking pin 130 which acts radially instead of axially.

The phaser in this embodiment has a stator 102 formed integrally with a drive sprocket 104 that is fixed relative to the two end plates 106 and 108. The rotor 110 is received within the stator 102 but can be accessed from the rear side of the phaser for connection to the camshaft. Vanes 112 projecting radially from the rotor 110 co-operate with recesses 114 in the stator to define arcuate variable volume working chambers. A torsion spring 100 is provided which is accommodated partly within an annular recess 115 in the rotor 110 and partly in an annular recess 116 defined by a toroidal deformation 132 in the front end plate 106.

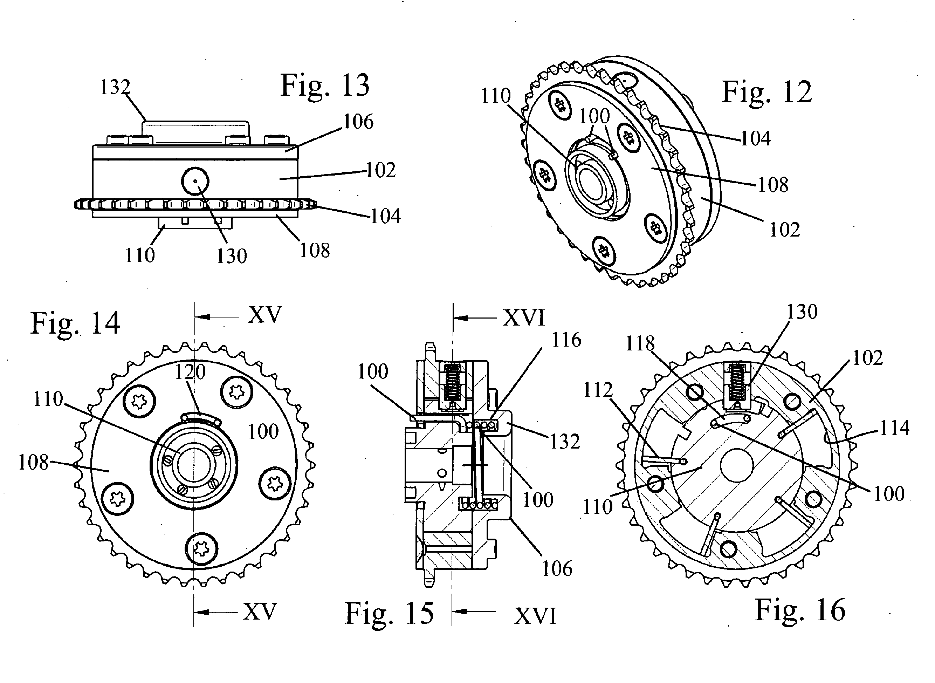

The torsion spring 100 works in a similar manner to the external arrangement shown in Figs. 7 and 8, except that slots 118, 120 are used to engage the spring rather than a pin and a lug. The spring is engaged in a slot 118 in the rotor 110 (see Fig. 16) and also in a slot 120 of identical width in the rear plate 108 of the phaser (see Fig. 11) Rotation of the phaser in either direction will cause the spring to be compressed as the slots 118 and 120 will move out of alignment with one another and therefore reduce their area of overlap.

The phaser may be mounted to a single cam phaser camshaft, an SCP camshaft being one in which cams mounted for rotation about the same axis can be phase shifted relative to one another. An SCP camshaft may comprise a tubular first shaft which concentrically surrounds and is rotatable relative to a second shaft, relative rotation of the two shafts causing selected cams of the camshaft to rotate relative to other cams of the camshaft. Each of the shafts of the camshaft assembly is connected for a rotation with a different respective one of the two driven of the phaser and the connections between the shafts of the camshaft assembly and the driven members of the phaser are interchangeable.

It will of course be clear that the same principle can be applied to phase a solid camshaft relative to the crankshaft.

## Claims

1. A camshaft phaser comprising a drive member (50) and a driven member (52, 54) having a fixed range of angular adjustment, a means for locking the position of the driven member relative to the drive member at an intermediate position within the range of adjustment, and a means (42) for biasing the phaser towards the intermediate position where the locking means will engage, **characterised in that** the means for biasing the phaser towards the lock position is a torque spring configured to act in both directions.

2. A camshaft phaser as claimed in claim 1, wherein the spring passes through a clearance slot in a timing sprocket or gear within which the phaser is incorporated.

3. A camshaft phaser as claimed in claim 1, wherein the spring is formed such that both ends may act on opposite sides of features secured respectively to the drive member and driven member.

4. A camshaft phaser as claimed in any one of the preceding claims, wherein the spring is preloaded in the locked position.

5. A camshaft phaser as claimed in any one of the preceding claims, wherein the locking means comprises a pin that engages in a hole.

6. A valve drive assembly comprising a camshaft phaser as claimed in any preceding claim in combination with a camshaft assembly comprising a tubular first shaft which concentrically surrounds and is rotatable relative to a second shaft, relative rotation of the two shafts causing selected cams of the camshaft to rotate relative to other cams of the camshaft, wherein each of the shafts of the camshaft assembly is connected for rotation with a different respective one of the two members of the phaser.

7. A valve drive assembly as claimed in claim 6, wherein the hollow second shaft of the camshaft is coupled for rotation with the first member of the phaser and the first shaft is coupled for rotation with the second member.

8. A valve drive assembly as claimed in claim 6, wherein the hollow second shaft of the camshaft is coupled for rotation with the second member of the phaser and the first shaft is coupled for rotation with the first member.

## Patentansprüche

1. Nockenwellenversteller umfassend ein Antriebsglied (50) und ein Abtriebsglied (52, 54) mit einem festen Winkelverstellbereich, ein Mittel zum Sperren der Position des Abtriebsgliedes im Verhältnis zum Antriebsglied in einer Zwischenposition innerhalb des Verstellbereichs und ein Mittel (42) zum Vorspannen des Verstellers in die Zwischenposition, wo das Sperrmittel zum Eingriff kommt, **dadurch gekennzeichnet, dass** das Mittel zum Vorspannen des Verstellers in die Sperrposition eine in beiden Richtungen wirkende Drehmomentfeder ist.

2. Nockenwellenversteller nach Anspruch 1, wobei die Feder durch einen Schlitz in einem Antriebsritzel oder Zahnrad geführt ist, in dem der Versteller aufgenommen ist.

3. Nockenwellenversteller nach Anspruch 1, wobei die Feder so ausgebildet ist, dass beide Enden auf gegenüberliegende Seiten von am Antriebs- und Abtriebsglied befestigten Elementen wirken können.

4. Nockenwellenversteller nach einem der vorhergehenden Ansprüche, wobei die Feder in Sperrposition vorgespannt ist.

5. Nockenwellenversteller nach einem der vorhergehenden Ansprüche, wobei die Sperrmittel einen in ein Loch eingreifenden Bolzen umfassen.

6. Ventiltrieb-Baugruppe mit einem Nockenwellenversteller nach einem der vorhergehenden Ansprüche in Kombination mit einer Nockenwellen-Baugruppe mit einer rohrförmigen ersten Welle, die eine zweite Welle konzentrisch umgibt und relativ dazu drehbar ist, wobei die Relativdrehung der beiden Wellen gewisse Nocken der Nockenwelle zur Drehung relativ zu anderen Nocken der Nockenwelle veranlasst, wobei die beiden Wellen der Nockenwellen-Baugruppe jeweils in Drehverbindung mit einem der beiden Glieder des Verstellers stehen.

7. Ventiltrieb-Baugruppe nach Anspruch 6, wobei die hohle zweite Welle der Nockenwelle mit dem ersten Glied des Verstellers und die erste Welle mit dem zweiten Glied in Drehverbindung steht.

8. Ventiltrieb-Baugruppe nach Anspruch 6, wobei die hohle zweite Welle der Nockenwelle mit dem zweiten Glied des Verstellers und die erste Welle mit dem ersten Glied in Drehverbindung steht.

## Revendications

1. Dispositif de mise en phase d'arbre à cames comprenant un élément menant (50) et un élément mené (52, 54) ayant une plage fixe de réglage angulaire, un moyen pour verrouiller la position de l'élément mené par rapport à l'élément menant à une position intermédiaire dans la plage de réglage, et un moyen (42) pour charger préliminairement le dispositif de mise en phase vers la position intermédiaire où le moyen de verrouillage s'engagera, **caractérisé en ce que** le moyen de charge préliminaire du dispositif de mise en phase vers la position de verrouillage est un ressort antagoniste configuré pour agir dans les deux sens.

2. Dispositif de mise en phase d'arbre à cames selon la revendication 1, dans lequel le ressort passe à travers une fente de dégagement dans une roue ou un engrenage de synchronisation dans lequel est incorporé le dispositif de mise en phase.

3. Dispositif de mise en phase d'arbre à cames selon la revendication 1, dans lequel le ressort est formé de telle sorte que les deux extrémités puissent agir sur des côtés opposés de mécanismes fixés respectivement à l'élément menant et à l'élément mené.

4. Dispositif de mise en phase d'arbre à cames selon l'une quelconque des revendications précédentes, dans lequel le ressort est préchargé dans la position verrouillée.

5. Dispositif de mise en phase d'arbre à cames selon l'une quelconque des revendications précédentes, dans lequel le moyen de verrouillage comprend une broche qui s'engage dans un orifice.

6. Ensemble d'entraînement de soupape comprenant un dispositif de mise en phase d'arbre à cames selon l'une quelconque des revendications précédentes, en combinaison avec un ensemble d'arbre à cames comprenant un premier arbre tubulaire qui entoure concentriquement un second arbre et est rotatif par rapport à celui-ci, la rotation relative des deux arbres amenant des cames sélectives de l'arbre à cames à tourner par rapport à d'autres cames de l'arbre à cames, chacun des arbres de l'ensemble d'arbre à cames étant connecté en vue de tourner avec un élément respectif différent des deux éléments du dispositif de mise en phase.

7. Ensemble d'entraînement de soupape selon la revendication 6, dans lequel le second arbre creux de l'arbre à cames est couplé en vue de tourner avec le premier élément du dispositif de mise en phase et le premier arbre est couplé en vue de tourner avec le second élément.

8. Ensemble d'entraînement de soupape selon la revendication 6, dans lequel le second arbre creux de l'arbre à cames est couplé en vue de tourner avec le second élément du dispositif de mise en phase et le premier arbre est couplé en vue de tourner avec le premier élément.
